# EUROPEAN PATENT APPLICATION

(11) **EP 0 708 290 A2**
(43) Date of publication of application: **24.04.1996**
(21) Application number: 95610052.3
(22) Date of filing: 17.10.1995
(51) Int. Cl.: F16L 59/10, B29C 61/06

(54) **Shrinking sleeve**

(30) Priority: 17.10.1994 DK 1196/94
(71) Applicant: Lögstör Rör A/S, DK-9670 Lögstör (DK)
(72) Inventor: Kirkegaard, Kim Jorgen Schultz, DK-9000 Aalborg (DK)
(74) Representative: Larsen, Hans Ole

(57) **Abstract**

A shrink sleeve of expanded synthetic material, particularly for the joints of jackets on pre-insulated district heating pipes (10), is provided with a series of corrugations or folds (5) which extend over at least a half of the periphery of the sleeve. The height of the corrugations (5) varies from a maximum on the one side of the sleeve to a minimum on the other side, preferably so that the one side of the sleeve is completely smooth. The effect of the asymmetrical folds (5) is that the sleeve can easily be adapted for a joining of the pipes in a bend. The side of the sleeve which lies outermost at the bend is thus capable of being stretched without the inner side of the bend being crumpled together. Consequently, the subsequent shrinking by influence from a gas flame will be able to be effected so that the shrunken sleeve lies smoothly up against both the outer side and the inner side of the bend.

## Description

### Background of the invention

The invention relates to a shrink sleeve of expanded synthetic material. The known shrink sleeves are used at straight joints of pre-insulated district heating pipes, where after the welding together of the free ends of the medium pipes the area at the weld is insulated. In order to achieve a jacket at the joint which is tight and impervious to moisture, the shrink sleeve is slid in over the joint and shrunk by heating with a gas flame.

At angle joints or joints around bends, it has been known to use corrugated pipes with wave-shaped folds which provide the sleeve with greater pliancy. These corrugated pipes are difficult to shrink, the reason being that the folds on the inside of the bend will be compressed and are thus impossible to heat to an adequate degree during the shrinking process. The tops of the folds are exposed to wear during the eventual thermic movements of the pipes in the ground. In places of difficult access, or places with only a limited amount of space, difficulties can also arise in finding room for the corrugations.

### Explanation of the invention

The special feature of the shrink sleeve according to the invention is that along its periphery the sleeve is provided with a series of corrugations or folds which extend along at least a half of the periphery, and the height of said folds along a radius of the sleeve from the top to the bottom of a fold varies from a maximum on one side of the sleeve to a minimum on a second oppositely-related side of the sleeve, and that at least the one end of the sleeve is smooth.

The shrink sleeve can be configured as a straight element or as a bend. If it is straight, it is merely slid in over one of the ends of the pipe which is to be joined in a bend. When the medium pipes have been welded together and insulated, for example in the form of a half-shell laid in place in the bend, the sleeve is pulled in over the bend with the highest part of the folds along the outer side of the bend. Because of the folds, the sleeve can easily stretch and adjust itself to the bend without any subsequent compression or crumpling together of the inner side of the sleeve in the bend. In the mounted state, the folds will be stretched out on the outer side of the bend and to some degree along the sides of the bend. Consequently, a uniform heating of the whole of the sleeve can easily be achieved when the sleeve is to be shrunk in place. During the shrinking, the inner side of the sleeve can contract smoothly up against the underlying insulation. With a suitable choice of dimensions and method of production, the sleeve in its shrunken state can be brought to lie up against the outer side of the bend in a completely smooth manner. The disadvantages which arise with the known sleeve elements for use at bends in connection with plastic-jacketed pipes are hereby avoided.

It is preferred to configure the shrink sleeve as disclosed in claim 2, whereby a suitable variation in the pliancy of the sleeve's folded part is achieved when the sleeve is bent. The side of the sleeve opposite the maximum height of the folds can thus be completely smooth, cf. claim 3.

It is preferred to configure the sleeve as disclosed in claim 4, whereby a greater pliancy is achieved than if the sides between top and bottom in the folds were of equal size.

By configuring the sleeve as a bend, cf. claims 5 and 6, the sleeve will have the correct geometry after mounting in the bend, and at the same time it will be easy for a person to straighten out the sleeve when it is drawn over one of the straight pipe ends.

### The drawing

Preferred embodiments of the shrink sleeve according to the invention will now be described in more detail with reference to the drawing, where
- fig. 1a and 1b: show a straight embodiment of the shrink sleeve seen from the end and from the side respectively, partly in section,
- fig. 2: shows the ends of two pre-insulated district heating pipes which are to be joined, and a shrink sleeve,
- fig. 3: shows the pipe ends in figure 2 after having been welded together, where the folds of the shrink sleeve lie innermost in the bend, partly in section,
- fig. 4: shows the same as in fig. 3, but where the shrink sleeve has been turned 180° so that the folds lie outermost on the bend,
- fig. 5: shows a second and curved embodiment of the shrink sleeve according to the invention before and after having been introduced over one of two pipe ends which are to be joined,
- fig. 6: shows the pipe joints in figures 4 and 5 after the shrinking of the sleeve, and
- fig. 7: shows a shrink sleeve according to the invention mounted on an elbow pipe for a T-piece.

### Description of the example embodiments

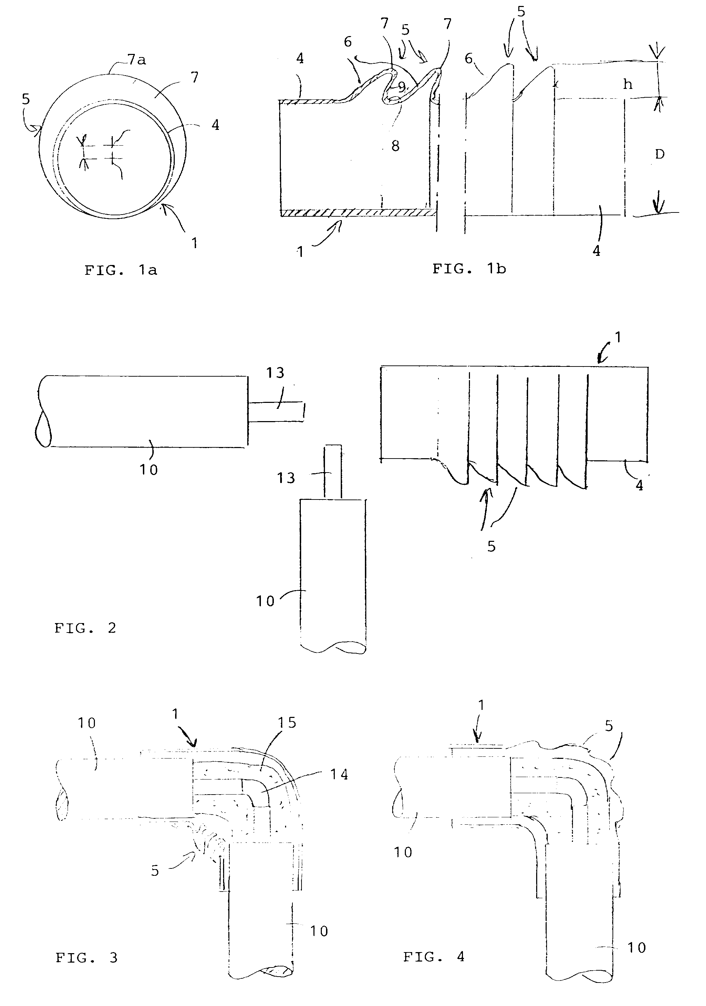

A straight shrink sleeve according to the invention is preferably configured as an injection-moulded item of polyethylene, which after electron radiation has been further expanded in a pressure mould. Other synthetic materials such as ethylvinylacetate can be used. Reference is made to figures 1a, 1b, 5 and 7 and three different embodiments 1, 2, 3 of the shrink sleeve according to the invention.

The ends 4 are smooth in all three embodiments, while a centre portion is provided with folds 5 which have an asymmetrical wave form. However, it will also fall within the spirit of the invention if the folds have a symmetrical wave form.

The asymmetry in the shape of the corrugations lies in the fact that those sides 6 which face towards the one end of the sleeve 1, and which lie between a top 7 and a bottom 8 in each fold, have a greater side length than the side 9 which faces towards the other end of the sleeve 1. There is hereby achieved a greater pliancy, in that there is less resistance against the folds 5 folding together.

As shown, the ends 4 of the sleeve can be cylindrical, but a slightly oval or elliptical shape is also possible in order to achieve a more expedient mounting of the sleeve on pre-insulated district heating pipes 10.

As shown in fig. 1a, the folds 5 can have a circular profile, the centre 11 of which is displaced in relation to the centre axes 12 of the ends 4. It is preferred that the displacement d between the axes 11, 12 corresponds to the difference in diameter between the tops 7 and the ends 4 of the folds. The height of the folds on the one side of the sleeve 1 thus becomes equivalent to zero, while at the tops 7 they reach their maximum 7a opposite the zero point. Naturally, other geometric shapes of the cross-section of the folds are possible, and it is also possible to let the distance d be greater that the difference in diameter between the tops and the ends 4 of the folds.

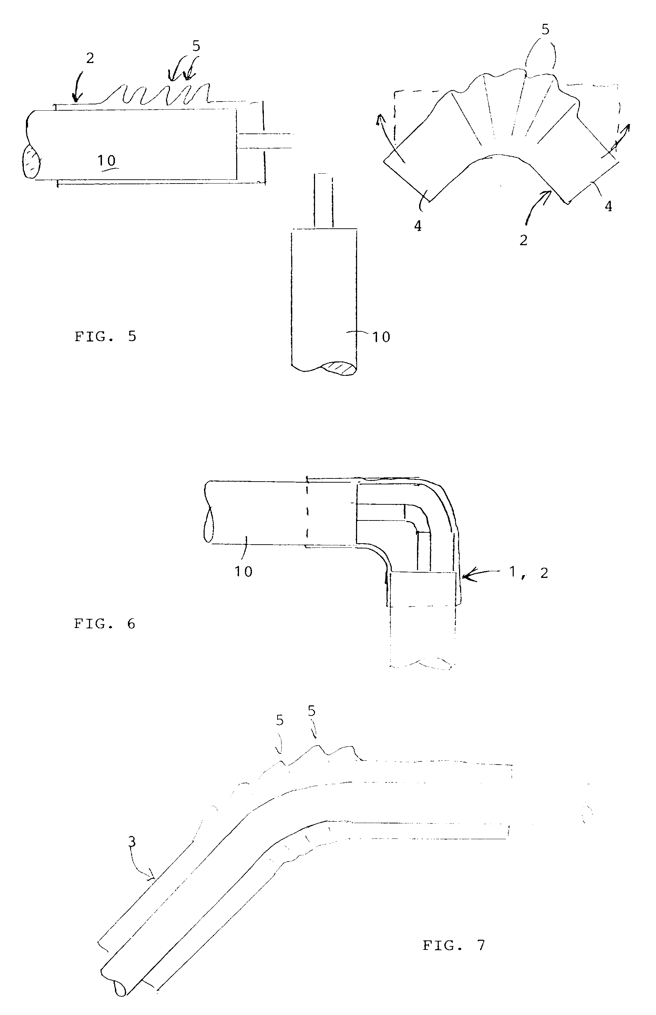

As shown in fig. 2, the shrink sleeve 1 can be used at the joint between two pre-insulated district heating pipes 10 which have already been laid, in that the sleeve 1 is introduced in over one of the pipes 10. Thereafter, the pipes 13 are joined together by the welding of an elbow 14 between them, after which subsequent insulation is carried out with half-shells 15 of polyurethane foam or other insulating material. The sleeve 1 is drawn from its position on the one pipe 10 over the elbow 14 and the half-shells 15 as shown in fig. 3. In this position, the folds 5 lie on the inner side of the bend, i.e. the folds are compressed, which is the easiest. Hereafter, the sleeve 1 is turned around the pipes 10 until the folds 5 lie on the outer side of the bend, see fig. 4. The sleeve 1 can now be shrunk in the normal manner by means of a gas flame, and the end result is as shown in fig. 6. Thus, when the sleeve has been shrunk, the folds 5 completely disappear.

A second embodiment of the sleeve is seen in fig. 5. During its production, the sleeve 2 shown here is configured as a bend corresponding to the joint for which it is to be used. The sleeve 2 thus has folds 5 also which here are flatter and have a greater distance between them than in the initial position for the straight embodiment 1. When mounting the sleeve 2, the ends 4 are drawn away from each other in the direction of the arrow, whereby the folds 5 are compressed, until the sleeve 2 can lie on the end of the straight pipe 10. Hereafter, the joining is effected as earlier described, in that the sleeve 2 can, however, be drawn immediately into place to a position corresponding to figure 4. The embodiment with reference number 2 is thus easier to mount, but the straight embodiment 1 is more space-saving and cheaper to radiate with electrons, the reason being that more straight items can be processed at the same time than is the case with curved items 2. After the shrinking of the sleeve 2, its finished state is as shown in fig. 6.

A third embodiment 3 of the sleeve for use at T-pieces for service pipes is shown in fig. 7. Here, a curved embodiment can be used, but with a smaller bend angle.

In the use of the shrink sleeves 1, 2, 3 according to the invention, it is also an advantage that, for reasons of the shrinkage capability, it is possible to use one size of sleeve for jacketed pipes of different diameters, in that the sleeve merely adjusts itself to the pipes 10. It is preferable that the height h of the folds over the smooth ends 4 divided by the end diameter D of the sleeve lies in the range of 0.05 - 0.35. Greater values of h/D are possible, e.g. up to 0.95.

The shrink sleeve according to the invention can be used in the joining or sealing of other types of pipe bends, and for both insulated and uninsulated pipes, for example drain pipes, ventilation pipes and sewage pipes.

## Claims

1. Shrink sleeve of expanded synthetic materials, **characterized** in that along its periphery the sleeve is provided with a series of corrugations or folds which extend along at least a half of the periphery, and the height of said folds along a radius of the sleeve from the top to the bottom of a fold varies from a maximum on one side of the sleeve to a minimum on a second oppositely-related side of the sleeve, and in that at least the one end of the sleeve is smooth.

2. Shrink sleeve according to claim 1, **characterized** in that the folds extend in a substantially circular manner along the periphery, where the centre of their extension is displaced in relation to the centre axis of the cylindrical part of the sleeve.

3. Shrink sleeve according to claim 1 or 2, **characterized** in that the minimum for the height of the folds is zero.

4. Shrink sleeve according to any of the claims 1-3, **characterized** in that the two sides of the folds, each of which faces an opposite end of the sleeve and connects a top and a bottom in each fold, are of different lengths.

5. Shrink sleeve according to any of the claims 1-4, **characterized** in that the sleeve is configured as a bend.

6. Shrink sleeve according to claim 5, **characterized** in that the folds have their maximum height on the outer side of the bend.

7. Shrink sleeve according to any of the foregoing claims, **characterized** in that the maximum height of the folds is of a size in the range of between 5% and 95% of the average diameter of the smooth part of the sleeve.
